# EUROPEAN PATENT APPLICATION

(11) **EP 4 797 641 A1**
(43) Date of publication of application: **26.08.2026**
(21) Application number: 24890184.5
(22) Date of filing: 27.07.2024
(51) Int. Cl.: H04L 41/14

(54) **SIMULATION METHOD, APPARATUS AND SYSTEM, AND STORAGE MEDIUM**

(30) Priority: 17.11.2023 CN 202311544550
(71) Applicant: HUAWEI TECHNOLOGIES CO., LTD., Shenzhen, Guangdong 518129 (CN)
(72) Inventor: YE, Shuxin, Shenzhen, Guangdong 518129 (CN); YOU, Zhiyi, Shenzhen, Guangdong 518129 (CN); LI, Yexing, Shenzhen, Guangdong 518129 (CN); YU, Yijun, Shenzhen, Guangdong 518129 (CN)
(74) Representative: Goddar, Heinz J.
(86) International application number: PCT/CN2024/108016
(87) International publication number: WO 2025/102819

(57) **Abstract**

A simulation method, apparatus, and system, and a storage medium are provided. A network simulation service consumer entity can propose an expectation of meeting different simulation performance requirements, so that a network simulation service provider entity can obtain a model parameter based on the expectation, and obtain a simulation model for simulation based on the model parameter, instead of always considering a superior simulation model in comprehensive dimensions for simulation in any scenario. The simulation performance requirements of the network simulation service consumer entity can be balanced, thereby improving simulation efficiency.

## Description

This application claims priority to Chinese Patent Application No. 202311544550.5, filed with the China National Intellectual Property Administration on November 17, 2023 and entitled "SIMULATION METHOD, APPARATUS, AND SYSTEM, AND STORAGE MEDIUM", which is incorporated herein by reference in its entirety.

### TECHNICAL FIELD

This application relates to the field of communication technologies, and in particular, to a simulation method, apparatus, and system, and a storage medium.

### BACKGROUND

A communication network can use a digital twin technology to explore a better solution beyond a physical network. As an application of the digital twin technology in the field of communication networks, a network twin aims to develop various network applications and implement efficient data-driven network management and maintenance.

An important application of the network twin is network simulation. Currently, a simulation model is generally a superior simulation model in comprehensive dimensions. The comprehensive dimensions may include a simulation accuracy, a simulation duration, and a computing resource. However, the three dimensions, that is, the simulation accuracy, the simulation duration, and the computing resource are strongly correlated. When the computing resource is fixed, a higher expected simulation accuracy generally indicates a longer simulation duration used for completing a simulation task; and a shorter expected simulation duration indicates a lower simulation accuracy of a result of network simulation. If a higher simulation accuracy and a longer simulation duration are expected, an extra computing resource may need to be invoked.

However, a current network simulation service provider entity performs network simulation by using a default simulation accuracy, a default simulation duration, and a default computing resource. This does not necessarily meet a requirement of a network simulation service producer entity.

Therefore, how to enable a network simulation service provider entity to better provide a network simulation service is a problem that needs to be resolved currently.

### SUMMARY

This application provides a simulation method, apparatus, and system, and a storage medium, to enable a network simulation service provider entity to better provide a network simulation service.

According to a first aspect, a simulation method is provided. The method may be performed by a network simulation service provider entity, or may be performed by a chip or a circuit configured in the network simulation service provider entity, or may be performed by a logical module or software that can implement all or some functions of the network simulation service provider entity. This is not limited in this application.

The method includes: receiving a simulation performance requirement, where the simulation performance requirement indicates a requirement of a network simulation service consumer entity for performance of network simulation; and sending a simulation report, where the simulation report indicates a result of the network simulation, and the network simulation is to simulate, based on the simulation performance requirement, a network management operation performed in a communication network.

In this aspect, the network simulation service provider entity receives an expected simulation performance requirement sent by the network simulation service consumer entity, so that the network simulation service provider entity can perform simulation based on the simulation performance requirement, instead of always considering a superior simulation model in comprehensive dimensions for simulation in any scenario. Therefore, the network simulation service provider entity can better provide a network simulation service.

In a possible implementation, the simulation report includes indication information, and the indication information indicates whether the performance and/or a process of the network simulation meet/meets the simulation performance requirement.

In another possible implementation, the method further includes: constructing a correspondence between at least one historical simulation performance requirement and at least one model parameter; and obtaining, based on the correspondence, a model parameter corresponding to the received simulation performance requirement, where the model parameter is used for constructing a simulation model, and the simulation model is used for simulating the network management operation performed in the communication network.

In this implementation, a simulation module in the network simulation service provider entity may obtain the correspondence between the at least one historical simulation performance requirement and the at least one model parameter by using previously collected real network data, including the model parameter, the result of the network simulation, and a real operation result of a physical network. When receiving the simulation performance requirement, the simulation module may obtain the model parameter corresponding to the received simulation performance requirement, to improve an accuracy of the obtained model parameter. The network simulation service provider entity may store the foregoing correspondence locally or on a third-party server, and may update the foregoing correspondence based on a simulation history. Richer historical data collected by the simulation module indicates a more accurate model parameter subsequently obtained by the network simulation service provider entity through querying based on the simulation performance requirement.

In still another possible implementation, when a first simulation performance requirement and a second simulation performance requirement are received, the method further includes: receiving priority information, where the priority information further indicates a first priority and a second priority, the first priority corresponds to the first simulation performance requirement, the second priority corresponds to the second simulation performance requirement, and the first priority is higher than the second priority; selecting a corresponding model parameter based on the first simulation performance requirement when the result of the network simulation cannot meet both the first simulation performance requirement and the second simulation performance requirement; and obtaining a simulation model based on the selected model parameter.

In this implementation, the network simulation service provider entity may further receive the priority information sent by the network simulation service consumer entity. When obtaining the model parameter and determining that the result of network simulation cannot meet both the first simulation performance requirement and the second simulation performance requirement, the network simulation service provider entity may preferentially meet a simulation performance requirement with a higher priority, so that a simulation model can be better constructed to meet a requirement of the network simulation service consumer entity.

In still another possible implementation, the first simulation performance requirement includes a simulation accuracy, and the simulation accuracy indicates closeness between a result of the network simulation expected by the network simulation service consumer entity and an actual execution result of the communication network; and/or the second simulation performance requirement includes a simulation duration, and the simulation duration indicates time consumed for the network simulation.

According to a second aspect, a simulation method is provided. The method may be performed by a network simulation service consumer entity, or may be performed by a chip or a circuit configured in the network simulation service consumer entity, or may be performed by a logical module or software that can implement all or some functions of the network simulation service consumer entity. This is not limited in this application.

The method includes: sending a simulation performance requirement, where the simulation performance requirement indicates a requirement of the network simulation service consumer entity for performance of network simulation; and receiving a simulation report, where the simulation report indicates a result of the network simulation, and the network simulation is to simulate, based on the simulation performance requirement, a network management operation performed in a communication network.

In this aspect, the network simulation service consumer entity sends an expected simulation performance requirement to a network simulation service provider entity, so that the network simulation service provider entity can perform simulation based on the simulation performance requirement, instead of always considering a superior simulation model in comprehensive dimensions for simulation in any scenario. Therefore, the network simulation service provider entity can better provide a network simulation service.

In a possible implementation, the simulation report includes indication information, and the indication information indicates whether the performance and/or a process of the network simulation meet/meets the simulation performance requirement.

In another possible implementation, when a first simulation performance requirement and a second simulation performance requirement are sent, the method further includes: sending priority information, where the priority information indicates a first priority and a second priority, the first priority corresponds to the first simulation performance requirement, the second priority corresponds to the second simulation performance requirement, and the first priority is higher than the second priority.

In this implementation, the network simulation service consumer entity may further send the priority information to a network simulation service provider entity. When obtaining a model parameter and determining that a result of first network simulation cannot meet the first simulation performance requirement and a result of second network simulation cannot meet the second simulation performance requirement, the network simulation service provider entity may preferentially meet a simulation performance requirement with a higher priority, so that a simulation model can be better constructed to meet a requirement of the network simulation service consumer entity.

In still another possible implementation, the first simulation performance requirement includes a simulation accuracy, and the simulation accuracy indicates closeness between a result of the network simulation expected by the network simulation service consumer entity and an actual execution result of the communication network; and/or the second simulation performance requirement includes a simulation duration, and the simulation duration indicates time consumed for the network simulation.

According to a third aspect, a simulation method is provided. The method may be performed by a network simulation service provider entity, or may be performed by a chip or a circuit configured in the network simulation service provider entity, or may be performed by a logical module or software that can implement all or some functions of the network simulation service provider entity. This is not limited in this application.

The method includes: receiving first indication information, where the first indication information indicates to preferentially meet a first simulation performance requirement in a plurality of simulation performance requirements when simulation is performed based on the plurality of simulation performance requirements, and the simulation performance requirement indicates a requirement of a network simulation service consumer entity for performance of network simulation; and sending a simulation report, where the simulation report indicates a result of the network simulation, and the network simulation is to simulate, based on the plurality of simulation performance requirements, a network management operation performed in a communication network.

In this aspect, the network simulation service provider entity may receive an indication that is sent by the network simulation service consumer entity and that indicates to preferentially meet the first simulation performance requirement when the simulation is performed based on the plurality of simulation performance requirements. The network simulation service provider entity may obtain a corresponding model parameter and construct a simulation model based on the indication, so that the network simulation service provider entity can better provide a network simulation service, and the result of the network simulation meets a requirement of the network simulation service consumer entity.

In a possible implementation, the simulation report includes second indication information, and the second indication information indicates whether the performance and/or a process of the network simulation meets the plurality of simulation performance requirements or the first simulation performance requirement.

In another possible implementation, the method further includes: constructing a correspondence between at least one historical simulation performance requirement and at least one model parameter; and obtaining, based on the correspondence, a model parameter corresponding to the first simulation performance requirement, where the model parameter is used for constructing a simulation model, and the simulation model is used for simulating the network management operation performed in the communication network.

In this implementation, a simulation module in the network simulation service provider entity may obtain the correspondence between the at least one historical simulation performance requirement and the at least one model parameter by using previously collected real network data, including the model parameter, the result of the network simulation, and a real operation result of a physical network. When receiving the simulation performance requirement, the simulation module may obtain the model parameter corresponding to the received simulation performance requirement, to improve an accuracy of the obtained model parameter. The network simulation service provider entity may store the foregoing correspondence locally or on a third-party server, and may update the foregoing correspondence based on a simulation history. Richer historical data collected by the simulation module indicates a more accurate model parameter subsequently obtained by the network simulation service provider entity through querying based on the simulation performance requirement.

In still another possible implementation, the first simulation performance requirement includes a simulation accuracy, and the simulation accuracy indicates closeness between a result of the network simulation expected by the network simulation service consumer entity and an actual execution result of the communication network; and/or the first simulation performance requirement includes a simulation duration, and the simulation duration indicates time consumed for the network simulation.

According to a fourth aspect, a simulation method is provided. The method may be performed by a network simulation service consumer entity, or may be performed by a chip or a circuit configured in the network simulation service consumer entity, or may be performed by a logical module or software that can implement all or some functions of the network simulation service consumer entity. This is not limited in this application.

The method includes: sending first indication information, where the first indication information indicates to preferentially meet a first simulation performance requirement in a plurality of simulation performance requirements when simulation is performed based on the plurality of simulation performance requirements, and the simulation performance requirement indicates a requirement of the network simulation service consumer entity for performance of network simulation; and receiving a simulation report, where the simulation report indicates a result of the network simulation, and the network simulation is to simulate, based on the plurality of simulation performance requirements, a network management operation performed in a communication network.

In this aspect, the network simulation service consumer entity may send, to a network simulation service provider entity, an indication indicating an expectation of preferentially meeting the first simulation performance requirement when the simulation is performed based on the plurality of simulation performance requirements. The network simulation service provider entity may obtain a corresponding model parameter and construct a simulation model based on the indication, so that the network simulation service provider entity can better provide a network simulation service, and the result of the network simulation meets a requirement of the network simulation service consumer entity.

In a possible implementation, the simulation report includes second indication information, and the second indication information indicates whether the performance and/or a process of the network simulation meets the plurality of simulation performance requirements or the first simulation performance requirement.

In another possible implementation, the first simulation performance requirement includes a simulation accuracy, and the simulation accuracy indicates closeness between a result of the network simulation expected by the network simulation service consumer entity and an actual execution result of the communication network; and/or the first simulation performance requirement includes a simulation duration, and the simulation duration indicates time consumed for the network simulation.

According to a fifth aspect, a simulation apparatus is provided. The simulation apparatus can implement the method for the network simulation service provider entity according to any one of the first aspect or the implementations of the first aspect. For example, the network simulation service provider entity may be a chip or a circuit. The foregoing method may be implemented by software, hardware, or hardware executing corresponding software.

In a possible implementation, the apparatus includes a transceiver unit and a processing unit. The transceiver unit is configured to receive a simulation performance requirement, where the simulation performance requirement indicates a requirement of a network simulation service consumer entity for performance of network simulation. In addition, the transceiver unit is further configured to send a simulation report, where the simulation report indicates a result of the network simulation, and the network simulation is to simulate, based on the simulation performance requirement, a network management operation performed in a communication network.

Optionally, the simulation report includes indication information, and the indication information indicates whether the performance and/or a process of the network simulation meet/meets the simulation performance requirement.

Optionally, the processing unit is configured to construct a correspondence between at least one historical simulation performance requirement and at least one model parameter. In addition, the processing unit is further configured to obtain, based on the correspondence, a model parameter corresponding to the received simulation performance requirement, where the model parameter is used for constructing a simulation model, and the simulation model is used for simulating the network management operation performed in the communication network.

Optionally, when the transceiver unit receives a first simulation performance requirement and a second simulation performance requirement, the transceiver unit is further configured to receive priority information, where the priority information further indicates a first priority and a second priority, the first priority corresponds to the first simulation performance requirement, the second priority corresponds to the second simulation performance requirement, and the first priority is higher than the second priority. The processing unit is further configured to select a corresponding model parameter based on the first simulation performance requirement when the result of the network simulation cannot meet both the first simulation performance requirement and the second simulation performance requirement. In addition, the processing unit is further configured to obtain a simulation model based on the selected model parameter.

Optionally, the first simulation performance requirement includes a simulation accuracy, and the simulation accuracy indicates closeness between a result of the network simulation expected by the network simulation service consumer entity and an actual execution result of the communication network; and/or the second simulation performance requirement includes a simulation duration, and the simulation duration indicates time consumed for the network simulation.

According to a sixth aspect, a simulation apparatus is provided. The simulation apparatus can implement the method for the network simulation service consumer entity according to any one of the second aspect or the implementations of the second aspect. For example, the network simulation service consumer entity may be a chip or a circuit. The foregoing method may be implemented by software, hardware, or hardware executing corresponding software.

In a possible implementation, the apparatus includes a transceiver unit and a processing unit. The transceiver unit is configured to send a simulation performance requirement, where the simulation performance requirement indicates a requirement of the network simulation service consumer entity for performance of network simulation. In addition, the transceiver unit is further configured to receive a simulation report, where the simulation report indicates a result of the network simulation, and the network simulation is to simulate, based on the simulation performance requirement, a network management operation performed in a communication network.

Optionally, the simulation report includes indication information, and the indication information indicates whether the performance and/or a process of the network simulation meet/meets the simulation performance requirement.

Optionally, when the transceiver unit sends a first simulation performance requirement and a second simulation performance requirement, the transceiver unit is further configured to send priority information, where the priority information indicates a first priority and a second priority, the first priority corresponds to the first simulation performance requirement, the second priority corresponds to the second simulation performance requirement, and the first priority is higher than the second priority.

Optionally, the first simulation performance requirement includes a simulation accuracy, and the simulation accuracy indicates closeness between a result of the network simulation expected by the network simulation service consumer entity and an actual execution result of the communication network; and/or the second simulation performance requirement includes a simulation duration, and the simulation duration indicates time consumed for the network simulation.

According to a seventh aspect, a simulation apparatus is provided. The simulation apparatus can implement the method for the network simulation service provider entity according to any one of the third aspect or the implementations of the third aspect. For example, the network simulation service provider entity may be a chip or a circuit. The foregoing method may be implemented by software, hardware, or hardware executing corresponding software.

In a possible implementation, the apparatus includes a transceiver unit and a processing unit. The transceiver unit is configured to receive first indication information, where the first indication information indicates to preferentially meet a first simulation performance requirement in a plurality of simulation performance requirements when simulation is performed based on the plurality of simulation performance requirements, and the simulation performance requirement indicates a requirement of a network simulation service consumer entity for performance of network simulation. In addition, the transceiver unit is further configured to send a simulation report, where the simulation report indicates a result of the network simulation, and the network simulation is to simulate, based on the plurality of simulation performance requirements, a network management operation performed in a communication network.

Optionally, the simulation report includes second indication information, and the second indication information indicates whether the performance and/or a process of the network simulation meets the plurality of simulation performance requirements or the first simulation performance requirement.

Optionally, the processing unit is configured to construct a correspondence between at least one historical simulation performance requirement and at least one model parameter. In addition, the processing unit is further configured to obtain, based on the correspondence, a model parameter corresponding to the first simulation performance requirement, where the model parameter is used for constructing a simulation model, and the simulation model is used for simulating the network management operation performed in the communication network.

Optionally, the first simulation performance requirement includes a simulation accuracy, and the simulation accuracy indicates closeness between a result of the network simulation expected by the network simulation service consumer entity and an actual execution result of the communication network; and/or the first simulation performance requirement includes a simulation duration, and the simulation duration indicates time consumed for the network simulation.

According to an eighth aspect, a simulation apparatus is provided. The simulation apparatus can implement the method for the network simulation service consumer entity according to any one of the fourth aspect or the implementations of the fourth aspect. For example, the network simulation service consumer entity may be a chip or a circuit. The foregoing method may be implemented by software, hardware, or hardware executing corresponding software.

In a possible implementation, the apparatus includes a transceiver unit and a processing unit. The transceiver unit is configured to send first indication information, where the first indication information indicates to preferentially meet a first simulation performance requirement in a plurality of simulation performance requirements when simulation is performed based on the plurality of simulation performance requirements, and the simulation performance requirement indicates a requirement of the network simulation service consumer entity for performance of network simulation. In addition, the transceiver unit is further configured to receive a simulation report, where the simulation report indicates a result of the network simulation, and the network simulation is to simulate, based on the plurality of simulation performance requirements, a network management operation performed in a communication network.

Optionally, the simulation report includes second indication information, and the second indication information indicates whether the performance and/or a process of the network simulation meets the plurality of simulation performance requirements or the first simulation performance requirement.

Optionally, the first simulation performance requirement includes a simulation accuracy, and the simulation accuracy indicates closeness between a result of the network simulation expected by the network simulation service consumer entity and an actual execution result of the communication network; and/or the first simulation performance requirement includes a simulation duration, and the simulation duration indicates time consumed for the network simulation.

With reference to the fifth aspect to the eighth aspect or any one of the fifth aspect to the eighth aspect, in another possible implementation, the simulation apparatus according to the fifth aspect to the eighth aspect or any one of the fifth aspect to the eighth aspect includes a processor coupled to a memory. The processor is configured to support the apparatus in performing a corresponding function in the foregoing method for synchronizing a network management operation instruction. The memory is configured to be coupled to the processor, and stores a program (instructions) and/or data necessary for the apparatus. Optionally, the simulation apparatus may further include a communication interface, configured to support communication between the apparatus and another network element. Optionally, the memory may be located inside the simulation apparatus, or may be located outside the simulation apparatus.

With reference to the fifth aspect to the eighth aspect or any one of the fifth aspect to the eighth aspect, in another possible implementation, the simulation apparatus according to the fifth aspect to the eighth aspect or any one of the fifth aspect to the eighth aspect includes a processor and a transceiver apparatus, the processor is coupled to the transceiver apparatus, the processor is configured to execute a computer program or instructions, to control the transceiver apparatus to receive and send information; and when the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from an apparatus other than the simulation apparatus and transmit the signal to the processor, or send a signal from the processor to an apparatus other than the simulation apparatus. When the simulation apparatus is a chip, the transceiver apparatus is a transceiver circuit or an input/output interface.

When the simulation apparatus according to the fifth aspect to the eighth aspect or any one of the fifth aspect to the eighth aspect is a chip or a chip module, a sending unit may be an output unit, for example, an output circuit or a communication interface, and a receiving unit may be an input unit, for example, an input circuit or a communication interface. When the simulation apparatus is a terminal or an access network device, a sending unit may be a transmitter or a transmitter machine, and a receiving unit may be a receiver or a receiver machine.

According to a ninth aspect, a simulation system is provided, and includes the simulation apparatus according to any one of the fifth aspect or the implementations of the fifth aspect and the simulation apparatus according to any one of the sixth aspect or the implementations of the sixth aspect.

According to a tenth aspect, a simulation system is provided, and includes the simulation apparatus according to any one of the seventh aspect or the implementations of the seventh aspect and the simulation apparatus according to any one of the eighth aspect or the implementations of the eighth aspect.

According to an eleventh aspect, a computer-readable storage medium is provided. The computer-readable storage medium stores a computer program or instructions. When a computer executes the computer program or the instructions, the methods according to the foregoing aspects are implemented.

According to a twelfth aspect, a computer program product including instructions is provided. When the instructions are run on a simulation apparatus, the simulation apparatus is enabled to perform the methods according to the foregoing aspects.

### BRIEF DESCRIPTION OF DRAWINGS

FIG. 1 is a diagram of a simulation procedure according to an embodiment of this application;
FIG. 2 is a diagram of an architecture of a simulation system according to an embodiment of this application;
FIG. 3 is a schematic flowchart of a simulation method according to an embodiment of this application;
FIG. 4 is a schematic flowchart of another simulation method according to an embodiment of this application;
FIG. 5 is a schematic flowchart of another simulation method according to an embodiment of this application;
FIG. 6 is a schematic flowchart of another simulation method according to an embodiment of this application;
FIG. 7 is a diagram of a structure of a simulation apparatus according to an embodiment of this application; and
FIG. 8 is a diagram of a structure of another simulation apparatus according to an embodiment of this application.

### DESCRIPTION OF EMBODIMENTS

The following describes embodiments of this application with reference to the accompanying drawings in embodiments of this application.

"At least one piece (item)" described in this application below indicates one piece (item) or a plurality of pieces (items). "A plurality of (items) "means two (items) or more (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although the terms first, second, and the like may be used in this application to describe objects, these objects are not limited by these terms. These terms are merely used for distinguishing the objects from each other. The terms "first", "second", and the like are used merely for description, and shall not be understood as an indication or implication of relative importance or an implicit indication of a quantity of indicated technical features. Therefore, a feature limited by "first", "second", or the like may explicitly or implicitly include one or more features. In the descriptions of this application, unless otherwise specified, "a plurality of" means two or more.

The terms "including", "having", and any other variant thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, the terms such as "example" or "for example" represents giving an example, an illustration, or a description. Any method or design scheme described as an "example" or "for example" in this application should not be explained as being preferred or having more advantages than another method or design scheme. Exactly, use of the term such as "example" or "for example" is intended to present a related concept in a specific manner.

The following describes implementations of this application by using specific embodiments. A person skilled in the art may understand other advantages and effects of this application based on content disclosed in this specification. Although description of this application is provided with reference to preferred embodiments, this does not mean that features of this application are limited to this implementation. On the contrary, a purpose of describing this application with reference to the implementations is to cover another option or modification that may be derived based on the claims of this application. To provide an in-depth understanding of this application, the following descriptions include a plurality of specific details. This application may alternatively be implemented without using these details. In addition, to avoid confusion or blurring a focus of this application, some specific details are omitted from the description. It should be noted that embodiments of this application and features in embodiments may be mutually combined in the case of no conflict.

A digital twin (digital twin, DT) is a technology that is becoming increasingly related to system automation. The DT is a virtual copy of a real-world system, that is, a "physical" system, on which an operation can be performed. Faced with an increasing quantity of service types, an increasing scale, and increasing complexity, a communication network needs to use a digital twin technology to explore a better solution beyond a physical network. A network twin, as an application of the digital twin technology in the field of communication networks, aims to develop various network applications and implement efficient data-driven network management and maintenance.

The network twin is a digital twin whose physical counterpart is a communication network or a part of the communication network. The communication network may include, for example, a physical network element and component, a virtualized network function (virtual network function, VNF) (that is, a network function element instantiated as a software-based entity), and a physical host, a service, and traffic that are used for the VNF.

Specifically, the network twin means that a digital mirror of the physical network (physical network) is established in a digitalized manner, and the physical network is digitalized by using historical network data, real-time network data, and an algorithm model of the physical network, to implement synchronous analysis and prediction on the physical network, and improve and optimize the physical network. That is, the network twin includes a digital representation of the physical network and is used for simulating the physical network. The digital representation includes the algorithm model, the data, and the like. The network twin may also be referred to as a network twin entity, a digital twin, or a digital twin entity. This is not limited in this application. The physical network is a network formed by connecting any type of physical device or network element (for example, a host, a router, or a switch) and a medium (an optical cable, a cable, a twisted pair, or the like) in a network. The physical network may be a mobile access network, a transport network, a mobile core network, a backbone network, or the like. The physical network may alternatively be a data center network, a campus network, an industrial internet of things, or the like. The network data may also be referred to as network running data, indicating a running status of the physical network, and may be a configuration parameter, alarm data, performance data, or the like of the physical device or the network element.

To better simulate and test a plurality of scenarios in the physical network, a network simulation service provider entity needs to update the network twin based on the running status of the physical network. More frequent interactions between the network simulation service provider entity and the physical network indicate more timely data collection and more accurate simulation and prediction results. Therefore, a strict requirement is imposed on an accuracy, timeliness, and interactivity of a network data collection and feedback process of the physical network.

An important application of the network twin is network simulation. During the network simulation, the network twin serves as a security sandbox to securely verify impact of a specific network management operation instruction on the physical network after the instruction is sent to the physical network, for example, verify an energy-saving solution and verify a signaling storm solution.

Requirements for a simulation accuracy and a simulation duration vary in different scenarios. For example, in a verification scenario of the signaling storm solution, a network is interrupted due to a fault, and a user is disconnected from the network and continuously attempts reconnections. As a result, signaling accumulation cannot be processed, and a signaling storm occurs. When a large amount of signaling hits core network elements, a plurality of network elements may experience a cascading failure due to congestion. As a result, the storm is spread. Before delivering a traffic control policy, a network simulation service consumer entity first performs simulation on a twin network. Therefore, the network simulation service consumer entity expects to obtain a result of the network simulation in short time and implement the policy as soon as possible, to mitigate the spread of the signaling storm. In a verification scenario of the energy-saving solution, the network simulation service consumer entity simulates, on the network twin, energy-saving configuration content to be delivered to a network element, and the network twin returns related performance metrics to the network simulation service consumer entity. Therefore, a simulation scenario of the energy-saving solution usually has no strong time limit, and the network simulation service consumer entity expects to obtain an accurate result of the network simulation.

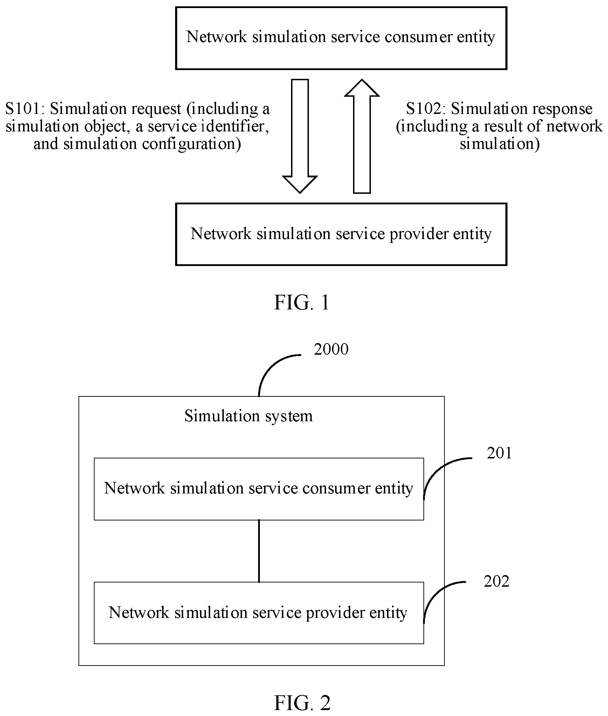

FIG. 1 is a diagram of a simulation procedure according to an embodiment of this application. The procedure may specifically include the following steps.

S101: A network simulation service consumer entity sends a simulation request to a network simulation service provider entity.

The simulation request is used for requesting the network simulation service provider entity to perform network simulation. The simulation request includes a simulation object, a service identifier, and simulation configuration. The service identifier is, for example, used for identifying a signaling storm solution or an energy-saving solution.

S102: After receiving the simulation request, the network simulation service provider entity performs the network simulation based on the simulation request, and sends a simulation response to the network simulation service consumer entity.

After the network simulation service provider entity receives the simulation request, a simulation module in the network simulation service provider entity selects a superior simulation model in comprehensive dimensions based on the service identifier. The comprehensive dimensions may include a simulation accuracy, a simulation duration, a computing resource, and the like.

The network simulation service provider entity performs the network simulation by using the simulation model, to obtain a result of the network simulation.

After the simulation ends, the network simulation service provider entity sends the simulation response to the network simulation service consumer entity. The simulation response includes the result of the network simulation.

However, when the simulation module performs the simulation, the three dimensions of the simulation accuracy, the simulation duration, and the computing resource are strongly correlated. When the computing resource is fixed, a higher expected simulation accuracy generally indicates a longer simulation duration used for completing a simulation task; and a shorter expected simulation duration indicates a lower simulation accuracy of the result of the network simulation. If a higher simulation accuracy and a longer simulation duration are expected, an extra computing resource may need to be invoked.

Therefore, the current network simulation service provider entity performs network simulation by using a default simulation accuracy, a default simulation duration, and a default computing resource. This does not necessarily meet a requirement of a network simulation service producer entity. In some scenarios, the network simulation service consumer entity may intend to sacrifice one of the simulation accuracy, the simulation duration, and the computing resource, to make another one of the simulation accuracy, the simulation duration, and the computing resource achieve a higher standard. For example, in a verification scenario of the energy-saving solution, due to no time limit, the network simulation service consumer entity is willing to spend more time performing simulation, to obtain a result with a high accuracy of network simulation, and the network simulation service consumer entity has a higher requirement for a simulation accuracy than for a simulation duration. In a verification scenario of the signaling storm solution, due to the urgency of resolving a signaling storm, the network simulation service consumer entity needs to obtain a result of network simulation in short time. In this case, a simulation accuracy may be slightly lower, and the network simulation service consumer entity has a higher requirement for a simulation duration than for the simulation accuracy.

An existing simulation module generally provides a superior simulation model in comprehensive dimensions based on the service identifier. In a simulation scenario having specific requirements for a simulation accuracy and a simulation duration, an accuracy of a final result of network simulation may be excessively low or a simulation duration may be excessively long.

In view of this, this application provides a simulation solution. A network simulation service consumer entity may propose an expectation of meeting different simulation performance requirements, so that a network simulation service provider entity can perform simulation based on the expectation, instead of always considering a superior simulation model in comprehensive dimensions for simulation in any scenario. Therefore, the network simulation service provider entity can better provide a network simulation service.

FIG. 2 is a diagram of an architecture of a simulation system according to an embodiment of this application. The system 2000 includes a network simulation service consumer entity 201 and a network simulation service provider entity 202 that may interact with each other. For example, the network simulation service consumer entity 201 may be located in a simulation system (network management system, NMS), and the network simulation service provider entity 202 may be located in an element management system (element management system, EMS). The network simulation service consumer entity 201 is configured to propose a simulation performance requirement and receive a simulation report. The network simulation service provider entity 202 is configured to provide a network simulation service, and may perform simulation based on the simulation performance requirement, return the simulation report, and the like.

In an embodiment of this application, the network simulation service consumer entity 201 sends a simulation performance requirement to the network simulation service provider entity 202, where the simulation performance requirement indicates a requirement of the network simulation service consumer entity for performance of network simulation; and the network simulation service provider entity 202 sends a simulation report to the network simulation service consumer entity 201, where the simulation report indicates a result of the network simulation, and the network simulation is to simulate, based on the simulation performance requirement, a network management operation performed in a communication network.

In another embodiment of this application, the network simulation service consumer entity 201 sends first indication information to the network simulation service provider entity 202, where the first indication information indicates to preferentially meet a first simulation performance requirement in a plurality of simulation performance requirements when simulation is performed based on the plurality of simulation performance requirements, and the simulation performance requirement indicates a requirement of the network simulation service consumer entity for performance of network simulation; and the network simulation service provider entity 202 sends a simulation report to the network simulation service consumer entity 201, where the simulation report indicates a result of the network simulation.

Based on the system shown in FIG. 2, the following describes simulation methods provided in embodiments of this application.

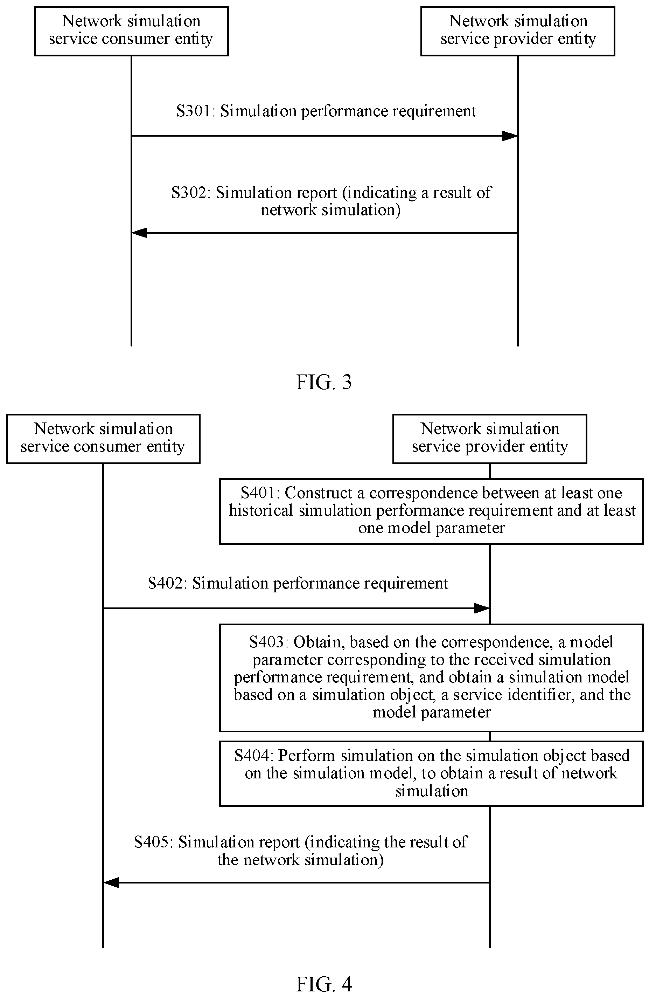

FIG. 3 is a schematic flowchart of a simulation method according to an embodiment of this application. For example, the method may include the following steps.

S301: A network simulation service consumer entity sends a simulation performance requirement to a network simulation service provider entity. Correspondingly, the network simulation service provider entity receives the simulation performance requirement.

As described above, a simulation module in the current network simulation service provider entity performs network simulation generally by using a default simulation accuracy, a default simulation duration, and a default computing resource. This does not necessarily meet a requirement of a network simulation service producer entity. However, the three dimensions of the simulation accuracy, the simulation duration, and the computing resource are strongly correlated, and some simulation performance requirements usually cannot reach higher standards. However, in some scenarios, the network simulation service consumer entity does not need to be superior in comprehensive dimensions, but needs to make one or more simulation performance requirements of the network simulation service consumer entity reach higher standards as much as possible. Therefore, in this embodiment, the network simulation service consumer entity may propose an expectation of meeting different simulation performance requirements of the network simulation service consumer entity, and allow the network simulation service consumer entity to customize the needed different simulation performance requirements, so that the network simulation service consumer entity sends the simulation performance requirements to the network simulation service provider entity. The simulation performance requirement indicates a requirement of the network simulation service consumer entity for performance of the network simulation, and the network simulation is to simulate, based on the simulation performance requirement, a network management operation performed in a communication network. The simulation performance requirement may also be referred to as a simulation performance demand, simulation performance metrics (performance metrics), or the like.

For example, the network simulation service consumer entity may send a simulation performance requirement with a higher expectation of the network simulation service consumer entity, for example, send a first simulation performance requirement, and may not send another simulation performance requirement, for example, a second simulation performance requirement, to allow the network simulation service provider entity to determine the second simulation performance requirement. For example, the network simulation service consumer entity may alternatively send a plurality of simulation performance requirements.

For example, the simulation performance requirement may be expressed as a range, for example, expressed as [minimum value, maximum value], or the simulation performance requirement may be expressed as a single number or percentage to indicate a minimum requirement, a level of accuracy, and the like that need to be achieved.

The network simulation service consumer entity further sends a simulation object and a service identifier to the network simulation service provider entity. The simulation object refers to an object for which a network management operation to be delivered by the network simulation service consumer entity to a physical network is performed. The simulation object may be a network element or the like in the physical network. There are a plurality of types of simulation services, for example, simulation of the foregoing energy-saving solution and simulation of the foregoing signaling storm solution. Different types of simulation services may have different service identifiers.

For example, the network simulation service consumer entity may send a simulation request to the network simulation service provider entity, where the simulation request includes the simulation performance requirement, the simulation object, and the service identifier.

S302: The network simulation service provider entity sends a simulation report to the network simulation service consumer entity. Correspondingly, the network simulation service consumer entity receives the simulation report.

After receiving the simulation performance requirement, the network simulation service provider entity obtains a corresponding model parameter based on the simulation performance requirement, obtains a simulation model based on the simulation object, the service identifier, and the model parameter, and then performs simulation on the simulation object based on the obtained simulation model, to obtain a result of network simulation. In other words, the result of the network simulation in this embodiment is obtained through simulation based on the simulation model, the simulation model is obtained based on the simulation object, the service identifier, and the model parameter, and the model parameter corresponds to the simulation performance requirement. The network simulation service provider entity obtains the simulation model based on the simulation performance requirement sent by the network simulation service consumer entity, instead of always using a superior simulation model in comprehensive dimensions for simulation in any scenario. Therefore, the network simulation service provider entity may select and create a simulation model that better meets a requirement of the network simulation service consumer entity.

It may be understood that, the network simulation service provider entity performs simulation based on the obtained simulation model. Although the network simulation service consumer entity proposes an expected simulation performance requirement, whether the simulation performance requirement can be met further needs to consider another parameter inside the network simulation service provider entity, for example, a computing resource of the network simulation service provider entity; or the simulation performance requirement proposed by the network simulation service consumer entity may be excessively high. Therefore, after the network simulation service provider entity performs the simulation, the following conclusion may be drawn: Determine whether a result of network simulation meets the simulation performance requirement.

After obtaining the result of the network simulation, the network simulation service provider entity sends a simulation report to the network simulation service consumer entity, where the simulation report indicates the result of the network simulation. For example, the simulation report includes indication information, and the indication information indicates whether the performance and/or a process of the network simulation meet/meets the simulation performance requirement. For example, the indication information is 1 bit. When a value of the indication information is "0", it indicates that the performance and/or the process of the network simulation do/does not meet the simulation performance requirement; or when a value of the indication information is "1", it indicates that the performance and/or the process of the network simulation meet/meets the simulation performance requirement. The simulation report may also be referred to as a simulation performance achievement status, a degree of fulfillment of a simulation performance requirement, or the like.

According to the simulation method provided in this embodiment of this application, the network simulation service consumer entity sends the expected simulation performance requirement, so that the network simulation service provider entity can perform the simulation based on the simulation performance requirement, and the network simulation service provider entity can better provide a network simulation service.

In the foregoing embodiment, the network simulation service provider entity obtains the simulation report based on the simulation performance requirement. The following embodiment further describes how the network simulation service provider entity obtains an accurate simulation report.

FIG. 4 is a schematic flowchart of another simulation method according to an embodiment of this application. For example, the method may include the following steps.

S401: A network simulation service provider entity constructs a correspondence between at least one historical simulation performance requirement and at least one model parameter.

A simulation module in the network simulation service provider entity may obtain the correspondence between the at least one historical simulation performance requirement and the at least one model parameter based on previously collected real network data, including the model parameter, a result of network simulation, and an actual execution result of a communication network (physical network).

For example, the simulation performance requirement may be a simulation accuracy (simulation accuracy), and the simulation accuracy indicates closeness between a result of the network simulation expected by the network simulation service consumer entity and the actual execution result of the communication network. A higher simulation accuracy indicates a more reliable simulation model and a more reliable result of the network simulation, and indicates a higher probability that the actual execution result of the communication network meets an expected result. The simulation accuracy may be expressed as a range, for example, expressed as [minimum value, maximum value], or the simulation accuracy may be expressed as a single number or percentage to indicate minimum accuracy, a level of accuracy, and the like that need to be achieved.

For example, the simulation performance requirement may be a simulation duration, and the simulation duration indicates a simulation duration expected by the network simulation service consumer entity. The simulation duration may be expressed as a range, for example, expressed as [minimum value, maximum value], or the simulation duration may be expressed as a single number to indicate an acceptable maximum running duration, a level of running speed/duration, and the like. The simulation duration may also be replaced with or referred to as a simulation speed, simulation running time, a simulation time length, or the like.

The model parameter includes a simulation step and a quantity of simulation times. Generally, a larger simulation step indicates a smaller quantity of sampling points, and correspondingly, a lower simulation accuracy and a shorter simulation duration. On the contrary, a smaller simulation step indicates a larger quantity of sampling points, and correspondingly, a higher simulation accuracy but a longer simulation duration. The quantity of simulation times is in direct proportion to the simulation accuracy and the simulation duration. The simulation module may construct a correspondence between at least one historical simulation accuracy, at least one historical simulation duration, and at least one model parameter, as shown in the following Table 1.

**Table 1**

| Simulation step | Quantity of simulation times | Simulation accuracy | Simulation duration |
|---|---|---|---|
| 1 | 1 | 0.5 | 0.6 |
| 2 | 1 | 0.3 | 0.5 |
| 1 | 2 | 0.83 | 0.8 |
| 2 | 2 | 0.7 | 0.65 |

The network simulation service provider entity may store the foregoing correspondence locally or on a third-party server, and may update the foregoing correspondence based on a simulation history. Richer historical data collected by the simulation module indicates a more accurate model parameter subsequently obtained by the network simulation service provider entity through querying based on the simulation performance requirement.

S402: The network simulation service consumer entity sends the simulation performance requirement to the network simulation service provider entity. Correspondingly, the network simulation service provider entity receives the simulation performance requirement.

For a specific implementation of this step, refer to step S301 in the embodiment shown in FIG. 3. Details are not described herein again.

S403: The network simulation service provider entity obtains, based on the correspondence, a model parameter corresponding to the received simulation performance requirement, and obtains a simulation model based on a simulation object, a service identifier, and the model parameter.

After receiving the simulation performance requirement, the network simulation service provider entity queries the correspondence to obtain the model parameter corresponding to the received simulation performance requirement. For example, if the network simulation service provider entity receives a simulation accuracy of 0.7 and a simulation duration of 0.65 that are sent by the network simulation service consumer entity, the network simulation service provider entity queries the correspondence to obtain a simulation step of 2 and a quantity of simulation times of 2.

Further, the network simulation service provider entity obtains the simulation model based on the simulation object, the service identifier, and the model parameter obtained through querying.

S404: The network simulation service provider entity performs simulation on the simulation object based on the simulation model, to obtain a result of network simulation.

For a specific implementation of this step, refer to step S302 in the embodiment shown in FIG. 3. Details are not described herein again.

S405: The network simulation service provider entity sends a simulation report to the network simulation service consumer entity. Correspondingly, the network simulation service consumer entity receives the simulation report.

For a specific implementation of this step, refer to step S302 in the embodiment shown in FIG. 3. Details are not described herein again.

According to the simulation method provided in this embodiment of this application, the network simulation service consumer entity sends an expected simulation performance requirement, so that the network simulation service provider entity specifies the expectation of the network simulation service consumer entity for the simulation performance requirement of the simulation model. Therefore, the network simulation service provider entity may obtain the model parameter based on the simulation performance requirement, and obtain the simulation model for simulation based on the model parameter, so that the network simulation service provider entity can better provide a network simulation service. In addition, the network simulation service provider entity pre-constructs the correspondence between the at least one historical simulation performance requirement and the at least one model parameter based on prior knowledge, so that after receiving the simulation performance requirement sent by the network simulation service consumer entity, the network simulation service provider entity can quickly obtain, through querying, the model parameter that should be used, and quickly obtain the simulation model, thereby further improving simulation efficiency and the simulation accuracy.

In the foregoing embodiment, the network simulation service consumer entity sends the expected simulation performance requirement, and the network simulation service provider entity obtains the model parameter based on the simulation performance requirement. However, in some scenarios, when there are a plurality of simulation performance requirements, because the simulation performance requirements are mutually balanced, it is possible that the simulation model cannot meet all of the foregoing simulation performance requirements. Therefore, the following embodiment is further provided below.

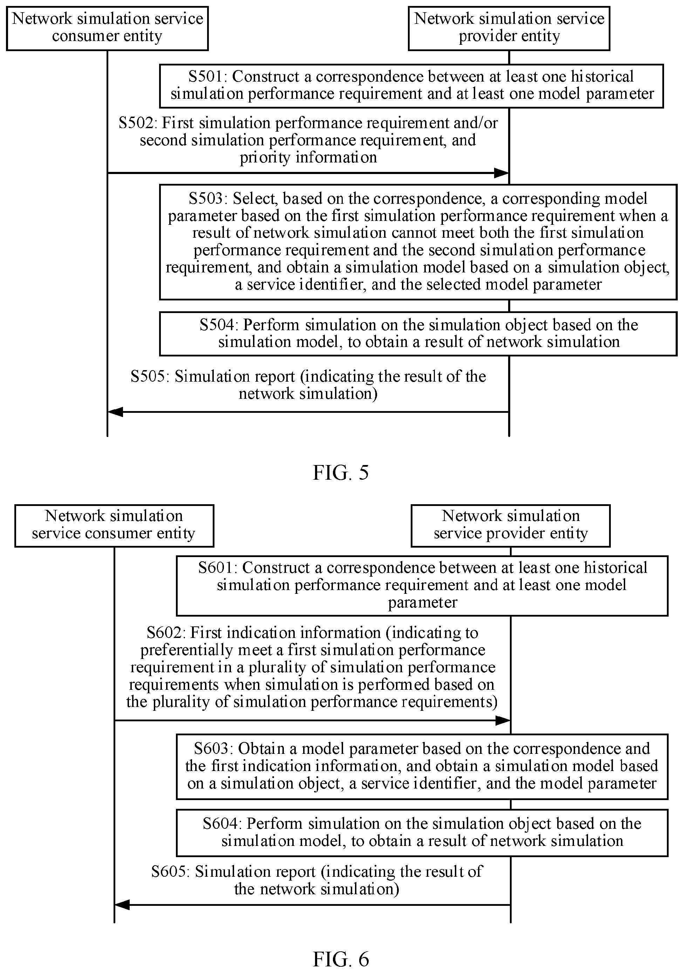

FIG. 5 is a schematic flowchart of another simulation method according to an embodiment of this application. For example, the method may include the following steps.

S501: A network simulation service provider entity constructs a correspondence between at least one historical simulation performance requirement and at least one model parameter.

For a specific implementation of this step, refer to step S401 in the embodiment shown in FIG. 4. Details are not described herein again.

S502: A network simulation service consumer entity sends a first simulation performance requirement and/or a second simulation performance requirement, and priority information to the network simulation service provider entity. Correspondingly, the network simulation service provider entity receives the first simulation performance requirement and/or the second simulation performance requirement, and the priority information.

For a specific implementation of this step, refer to step S301 in the embodiment shown in FIG. 3 or step S402 in the embodiment shown in FIG. 4. A difference lies in that the network simulation service consumer entity further sends the priority information to the network simulation service provider entity. The priority information indicates to preferentially meet which simulation performance requirement when the model parameter is obtained and it is determined that a result of network simulation cannot meet both the first simulation performance requirement and the second simulation performance requirement. In an example, the priority information includes a first priority and a second priority. The first priority corresponds to the first simulation performance requirement, and the second priority corresponds to the second simulation performance requirement. The first priority is higher than the second priority. When the model parameter is obtained and it is determined that the result of the network simulation cannot meet both the first simulation performance requirement and the second simulation performance requirement, the first simulation performance requirement with a higher priority is preferentially met. In another example, the priority information is indication information. For example, the network simulation service consumer entity sends the first simulation performance requirement and the second simulation performance requirement, and the indication information indicates to preferentially meet the first simulation performance requirement or the second simulation performance requirement when the model parameter is obtained and it is determined that the result of the network simulation cannot meet both the first simulation performance requirement and the second simulation performance requirement. For example, the indication information is 1 bit. When a value of the bit is "1", it indicates to preferentially meet the first simulation performance requirement; or when a value of the bit is "0", it indicates to preferentially meet the second simulation performance requirement.

For example, the network simulation service consumer entity sends a simulation request to the network simulation service provider entity, where the simulation request includes the first simulation performance requirement and/or the second simulation performance requirement, a simulation object, a service identifier, and the priority information.

S503: The network simulation service provider entity selects, based on the correspondence, a corresponding model parameter based on the first simulation performance requirement when the result of the network simulation cannot meet both the first simulation performance requirement and the second simulation performance requirement, and obtains a simulation model based on the simulation object, the service identifier, and the selected model parameter.

After receiving the first simulation performance requirement and the second simulation performance requirement, the network simulation service provider entity queries the correspondence to obtain a model parameter corresponding to the first simulation performance requirement and the second simulation performance requirement. However, because the simulation performance requirements are mutually balanced, it is possible that the result of the network simulation determined based on the selected model parameter cannot meet the foregoing simulation performance requirements. Therefore, the network simulation service provider entity selects, based on the priority information, a model parameter corresponding to a simulation performance requirement with a high priority, and obtains a simulation model based on the simulation object, the service identifier, and the selected model parameter.

If the network simulation service provider entity determines that the selected model parameter can meet the simulation performance requirement with a high priority, the network simulation service provider entity may further select a model parameter that can also meet a simulation performance requirement with a low priority.

S504: The network simulation service provider entity performs simulation on the simulation object based on the simulation model, to obtain a result of network simulation.

For a specific implementation of this step, refer to step S302 in the embodiment shown in FIG. 3 or step S404 in the embodiment shown in FIG. 4. Details are not described herein again.

S505: The network simulation service provider entity sends a simulation report to the network simulation service consumer entity. Correspondingly, the network simulation service consumer entity receives the simulation report.

For a specific implementation of this step, refer to step S302 in the embodiment shown in FIG. 3 or step S405 in the embodiment shown in FIG. 4. Details are not described herein again. The simulation report indicates whether the result of the network simulation meets the first simulation performance requirement.

According to the simulation method provided in this embodiment of this application, when sending an expected simulation performance requirement, the network simulation service consumer entity may further carry the priority information, so that when obtaining the model parameter and determining that the result of the network simulation cannot meet a plurality of simulation performance requirements, the network simulation service provider entity can preferentially meet a simulation performance requirement that the network simulation service consumer entity has a stronger expectation to meet, thereby better constructing a simulation model to meet a requirement of the network simulation service consumer entity.

In the foregoing embodiments, the network simulation service consumer entity provides the expected simulation performance requirement. However, in some scenarios, the network simulation service consumer entity cannot provide a specific expected simulation performance requirement, but can only propose an expectation of preferentially meeting which simulation performance requirement or simulation performance requirements, that is, have a preference for which simulation performance requirement or simulation performance requirements. The following describes the solution in detail by using an embodiment.

FIG. 6 is a schematic flowchart of another simulation method according to an embodiment of this application. For example, the method may include the following steps.

S601: A network simulation service provider entity constructs a correspondence between at least one historical simulation performance requirement and at least one model parameter.

For a specific implementation of this step, refer to step S401 in the embodiment shown in FIG. 4 or step S501 in the embodiment shown in FIG. 5. Details are not described herein again.

S602: A network simulation service consumer entity sends first indication information to the network simulation service provider entity. Correspondingly, the network simulation service provider entity receives the first indication information.

Different from the foregoing embodiment, in this embodiment, the network simulation service consumer entity may not learn of a specific simulation performance requirement, but only learns that the network simulation service consumer entity expects to preferentially meet a simulation performance requirement during simulation. Therefore, the network simulation service consumer entity does not send the specific simulation performance requirement to the network simulation service provider entity, but sends the first indication information. The first indication information indicates to preferentially meet a first simulation performance requirement in a plurality of simulation performance requirements when simulation is performed based on the plurality of simulation performance requirements. Further, the first indication information may alternatively indicate to preferentially meet a plurality of simulation performance requirements. The simulation performance requirement indicates a requirement of the network simulation service consumer entity for performance of network simulation, and the network simulation is to simulate a network management operation performed in a communication network. The simulation performance requirement may also be referred to as a simulation performance demand, simulation performance metrics, or the like.

For example, factors that need to be considered when the network simulation service provider entity obtains the model parameter include a simulation accuracy, a simulation duration, and a computing resource. The network simulation service consumer entity may fail to provide an expected specific simulation accuracy and simulation duration, but may indicate, by using the first indication information, that a simulation model is expected to preferentially improve the simulation accuracy, or that a simulation system is expected to preferentially reduce the simulation duration.

S603: The network simulation service provider entity obtains a model parameter based on the correspondence and the first indication information, and obtains a simulation model based on a simulation object, a service identifier, and the model parameter.

After receiving the first indication information from the network simulation service consumer entity, the network simulation service provider entity may obtain, when obtaining the model parameter, a model parameter corresponding to the first simulation performance requirement based on the first indication information and the foregoing correspondence. The obtained model parameter preferentially meets the first simulation performance requirement that the network simulation service consumer entity expects to preferentially meet. After the model parameter is obtained, the simulation model is constructed based on the model parameter.

S604: The network simulation service provider entity performs simulation on the simulation object based on the simulation model, to obtain a result of network simulation.

For a specific implementation of this step, refer to step S302 in the embodiment shown in FIG. 3, step S404 in the embodiment shown in FIG. 4, or step S504 in the embodiment shown in FIG. 5. Details are not described herein again.

S605: The network simulation service provider entity sends a simulation report to the network simulation service consumer entity. Correspondingly, the network simulation service consumer entity receives the simulation report.

After obtaining the result of the network simulation, the network simulation service provider entity may determine whether the result of the network simulation meets the plurality of simulation performance requirements or the first simulation performance requirement. Therefore, the network simulation service provider entity sends the simulation report to the network simulation service consumer entity, where the simulation report indicates the result of the network simulation. For example, the simulation report includes second indication information, and the second indication information indicates whether the performance and/or a process of the network simulation meets the plurality of simulation performance requirements or the first simulation performance requirement. For example, the second indication information is 1 bit. When a value of the indication information is "0", it indicates that the performance and/or the process of the network simulation do/does not meet the simulation performance requirement; or when a value of the second indication information is "1", it indicates that the performance and/or the process of the network simulation meet/meets the simulation performance requirement. Further, the simulation report may include the foregoing result of the network simulation, and may further indicate whether the result of the network simulation meets another simulation performance requirement.

According to the simulation method provided in this embodiment of this application, the network simulation service consumer entity may send, to the network simulation service provider entity, an indication indicating a specific simulation performance requirement that the network simulation service consumer entity expects to preferentially meet, and the network simulation service provider entity may obtain the corresponding model parameter and construct the simulation model based on the indication, so that the network simulation service provider entity better provides a simulation service, and the result of the network simulation meets a requirement of the network simulation service consumer entity.

It may be understood that, in the foregoing embodiments, the methods and/or the steps implemented by the network simulation service provider entity may alternatively be implemented by a component (for example, a chip or a circuit) that can be used in the network simulation service provider entity, and the methods and/or the steps implemented by the network simulation service consumer entity may alternatively be implemented by a component (for example, a chip or a circuit) that can be used in the network simulation service consumer entity.

The foregoing mainly describes the solutions provided in embodiments of this application from a perspective of interaction between entities. Correspondingly, an embodiment of this application further provides a simulation apparatus, and the simulation apparatus is configured to implement the foregoing methods. The simulation apparatus may be the network simulation service provider entity in the foregoing method embodiments, or may be a component that can be used in the network simulation service provider entity; or the simulation apparatus may be the network simulation service consumer entity in the foregoing method embodiments, or may be a component that can be used in the network simulation service consumer entity. It may be understood that, to implement the foregoing functions, the simulation apparatus includes a hardware structure and/or a software module for performing the corresponding functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the simulation apparatus may be divided into functional modules based on the foregoing method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, division into modules is an example, is merely logical function division, and may be another division during actual implementation.

Based on the same concept of the foregoing simulation methods, this application further provides the following simulation apparatuses.

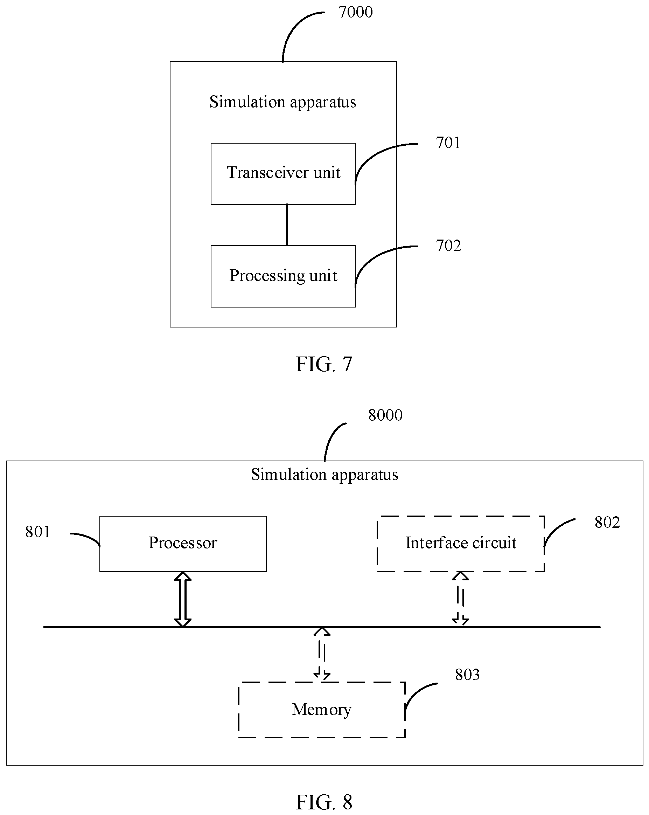

FIG. 7 is a diagram of a structure of a simulation apparatus according to an embodiment of this application. The simulation apparatus 7000 includes a transceiver unit 701 and a processing unit 702.

When the simulation apparatus is configured to implement functions of the network simulation service provider entity in the foregoing method embodiments, the transceiver unit 701 is configured to perform functions of the network simulation service provider entity in steps S301 and S302 in the embodiment shown in FIG. 3; or the transceiver unit 701 is configured to perform functions of the network simulation service provider entity in steps S402 and S405 in the embodiment shown in FIG. 4, and the processing unit 702 is configured to perform steps S401, S403, and S404 in the embodiment shown in FIG. 4; or the transceiver unit 701 is configured to perform functions of the network simulation service provider entity in steps S502 and S505 in the embodiment shown in FIG. 5, and the processing unit 702 is configured to perform steps S501, S503, and S504 in the embodiment shown in FIG. 5; or the transceiver unit 701 is configured to perform functions of the network simulation service provider entity in steps S602 and S605 in the embodiment shown in FIG. 6, and the processing unit 702 is configured to perform steps S601, S603, and S604 in the embodiment shown in FIG. 6.

When the simulation apparatus is configured to implement functions of the network simulation service consumer entity in the foregoing method embodiments, the transceiver unit 701 is configured to perform functions of the network simulation service consumer entity in steps S301 and S302 in the embodiment shown in FIG. 3; or the transceiver unit 701 is configured to perform functions of the network simulation service consumer entity in steps S402 and S405 in the embodiment shown in FIG. 4; or the transceiver unit 701 is configured to perform functions of the network simulation service consumer entity in steps S502 and S505 in the embodiment shown in FIG. 5; or the transceiver unit 701 is configured to perform functions of the network simulation service consumer entity in steps S602 and S605 in the embodiment shown in FIG. 6.

For specific implementation of the transceiver unit 701 and the processing unit 702, refer to the descriptions in the foregoing method embodiments. Details are not described herein again.

FIG. 8 is a diagram of a structure of another simulation apparatus according to an embodiment of this application. The simulation apparatus 8000 includes a processor 801, and may further include an interface circuit 802 and a memory 803 (which are represented by dashed lines in the figure). The processor 801 and the interface circuit 802 are coupled to each other. It may be understood that the interface circuit 802 may be a transceiver or an input/output interface. The memory 803 is configured to: store instructions executed by the processor 801, store input data needed by the processor 801 to run the instructions, or store data generated by running the instructions by the processor 801. The processor 801 is configured to implement a function of the processing unit 702 in the embodiment shown in FIG. 7, and the interface circuit 802 is configured to implement a function of the transceiver unit 701 in the embodiment shown in FIG. 7.

When the simulation apparatus is a chip used in the network simulation service provider entity, the chip implements a function of the network simulation service provider entity in the foregoing method embodiments. The chip receives information from another module (for example, a radio frequency module or an antenna) in the network simulation service provider entity, where the information is sent by the network simulation service consumer entity to the network simulation service provider entity; or the chip sends information to another module (for example, a radio frequency module or an antenna) in the network simulation service provider entity, where the information is sent by the network simulation service provider entity to the network simulation service consumer entity.

When the simulation apparatus is a chip used in the network simulation service consumer entity, the chip implements a function of the network simulation service consumer entity in the foregoing method embodiments. The chip receives information from another module (for example, a radio frequency module or an antenna) in the network simulation service consumer entity, where the information is sent by the network simulation service provider entity to the network simulation service consumer entity; or the chip sends information to another module (for example, a radio frequency module or an antenna) in the network simulation service consumer entity, where the information is sent by the network simulation service consumer entity to the network simulation service provider entity.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

Division into modules in this application is an example, is merely logical function division, and may be another division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides a simulation system including the foregoing simulation apparatuses.

An embodiment of this application further provides a circuit. The circuit is coupled to a memory, and the circuit is configured to perform the methods shown in the foregoing embodiments. The circuit may include a chip circuit.

It should be noted that one or more of the foregoing units may be implemented by software, hardware, or a combination of software and hardware. When any one of the foregoing units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array, another programmable logic device, a discrete gate, a transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly performed by a hardware processor, or may be performed and completed by a combination of hardware and a software module in a processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a special-purpose logic operation.

When the foregoing units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is enabled to perform the method in any one of the foregoing method embodiments. Optionally, the chip system may include a chip, or may include a chip and another discrete device. This is not specifically limited in embodiments of this application.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be used to carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

In embodiments of this application, the term "example" or "for example" represents giving an example, an illustration, or a description. Any embodiment or design scheme described as an "example" or "for example" in embodiments of this application should not be explained as being preferred or having more advantages than another embodiment or design scheme. Exactly, use of the term such as "example" or "for example" is intended to present a related concept in a specific manner for ease of understanding.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described herein with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatuses in embodiments of this application may be combined, divided, and deleted based on an actual requirement. A person skilled in the art may combine different embodiments or features of different embodiments described in this specification.

The foregoing embodiments are merely intended for describing the technical solutions of this application, rather than limiting this application. Although this application is described in detail with reference to the foregoing embodiments, a person of ordinary skill in the art should understand that modifications can be made to the technical solutions described in the foregoing embodiments, or equivalent replacements can be made to some technical features thereof without departing from the scope of the technical solutions of embodiments of this application.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A simulation method, wherein the method comprises:
receiving a simulation performance requirement, wherein the simulation performance requirement indicates a requirement of a network simulation service consumer entity for performance of network simulation; and
sending a simulation report, wherein the simulation report indicates a result of the network simulation, and
the network simulation is to simulate, based on the simulation performance requirement, a network management operation performed in a communication network.

2. The method according to claim 1, wherein the simulation report comprises indication information, and the indication information indicates whether the performance and/or a process of the network simulation meet/meets the simulation performance requirement.

3. The method according to claim 1 or 2, wherein when a first simulation performance requirement and a second simulation performance requirement are received, the method further comprises:
receiving priority information, wherein the priority information indicates a first priority and a second priority, the first priority corresponds to the first simulation performance requirement, the second priority corresponds to the second simulation performance requirement, and the first priority is higher than the second priority;
selecting a corresponding model parameter based on the first simulation performance requirement when the result of the network simulation cannot meet both the first simulation performance requirement and the second simulation performance requirement; and
obtaining a simulation model based on the selected model parameter.

4. The method according to claim 3, wherein the first simulation performance requirement comprises a simulation accuracy, and the simulation accuracy indicates closeness between a result of the network simulation expected by the network simulation service consumer entity and an actual execution result of the communication network; and/or
the second simulation performance requirement comprises a simulation duration, and the simulation duration indicates time consumed for the network simulation.

5. The method according to any one of claims 1 to 4, wherein the method further comprises:
constructing a correspondence between at least one historical simulation performance requirement and at least one model parameter; and
obtaining, based on the correspondence, a model parameter corresponding to the received simulation performance requirement, wherein the model parameter is used for constructing a simulation model, and the simulation model is used for performing the network simulation.

6. A simulation method, wherein the method comprises:
sending a simulation performance requirement, wherein the simulation performance requirement indicates a requirement of a network simulation service consumer entity for performance of network simulation; and
receiving a simulation report, wherein the simulation report indicates a result of the network simulation, and
the network simulation is to simulate, based on the simulation performance requirement, a network management operation performed in a communication network.

7. The method according to claim 6, wherein the simulation report comprises indication information, and the indication information indicates whether the performance and/or a process of the network simulation meet/meets the simulation performance requirement.

8. The method according to claim 6 or 7, wherein when a first simulation performance requirement and a second simulation performance requirement are sent, the method further comprises:
sending priority information, wherein the priority information indicates a first priority and a second priority, the first priority corresponds to the first simulation performance requirement, the second priority corresponds to the second simulation performance requirement, and the first priority is higher than the second priority.

9. The method according to claim 8, wherein the first simulation performance requirement comprises a simulation accuracy, and the simulation accuracy indicates closeness between a result of the network simulation expected by the network simulation service consumer entity and an actual execution result of the communication network; and/or
the second simulation performance requirement comprises a simulation duration, and the simulation duration indicates time consumed for the network simulation.

10. A simulation method, wherein the method comprises:
receiving first indication information, wherein the first indication information indicates to preferentially meet a first simulation performance requirement in a plurality of simulation performance requirement when simulation is performed based on the plurality of simulation performance requirements, and the simulation performance requirement indicates a requirement of a network simulation service consumer entity for performance of network simulation; and
sending a simulation report, wherein the simulation report indicates a result of the network simulation, and
the network simulation is to simulate, based on the plurality of simulation performance requirements, a network management operation performed in a communication network.

11. The method according to claim 10, wherein the simulation report comprises second indication information, and the second indication information indicates whether the performance and/or a process of the network simulation meets the plurality of simulation performance requirements or the first simulation performance requirement.

12. The method according to claim 10, wherein the method further comprises:
constructing a correspondence between at least one historical simulation performance requirement and at least one model parameter; and
obtaining, based on the correspondence, a model parameter corresponding to the first simulation performance requirement, wherein the model parameter is used for constructing a simulation model, and the simulation model is used for performing the network simulation.

13. The method according to any one of claims 10 to 12, wherein the first simulation performance requirement comprises a simulation accuracy, and the simulation accuracy indicates closeness between a result of the network simulation expected by the network simulation service consumer entity and an actual execution result of the communication network; and/or
the first simulation performance requirement comprises a simulation duration, and the simulation duration indicates time consumed for the network simulation.

14. A simulation method, wherein the method comprises:
sending first indication information, wherein the first indication information indicates to preferentially meet a first simulation performance requirement in a plurality of simulation performance requirements when simulation is performed based on the plurality of simulation performance requirements, and the simulation performance requirement indicates a requirement of a network simulation service consumer entity for performance of network simulation; and
receiving a simulation report, wherein the simulation report indicates a result of the network simulation, and
the network simulation is to simulate, based on the plurality of simulation performance requirements, a network management operation performed in a communication network.

15. The method according to claim 14, wherein the simulation report comprises second indication information, and the second indication information indicates whether the performance and/or a process of the network simulation meets the plurality of simulation performance requirements or the first simulation performance requirement.

16. The method according to claim 14 or 15, wherein the first simulation performance requirement comprises a simulation accuracy, and the simulation accuracy indicates closeness between a result of the network simulation expected by the network simulation service consumer entity and an actual execution result of the communication network; and/or
the first simulation performance requirement comprises a simulation duration, and the simulation duration indicates time consumed for the network simulation.

17. A simulation method, wherein the method comprises:
sending, by a network simulation service consumer entity, a simulation performance requirement to a network simulation service provider entity, wherein the simulation performance requirement indicates a requirement of the network simulation service consumer entity for performance of network simulation; and
sending, by the network simulation service provider entity, a simulation report to the network simulation service consumer entity, wherein the simulation report indicates a result of the network simulation, and
the network simulation is to simulate, based on the simulation performance requirement, a network management operation performed in a communication network.

18. A simulation method, wherein the method comprises:
sending, by a network simulation service consumer entity, first indication information to a network simulation service provider entity, wherein the first indication information indicates to preferentially meet a first simulation performance requirement in a plurality of simulation performance requirements when simulation is performed based on the plurality of simulation performance requirements, and the simulation performance requirement indicates a requirement of the network simulation service consumer entity for performance of network simulation; and
sending, by the network simulation service provider entity, a simulation report to the network simulation service consumer entity, wherein the simulation report indicates a result of the network simulation, and
the network simulation is to simulate, based on the plurality of simulation performance requirements, a network management operation performed in a communication network.

19. A simulation apparatus, wherein the apparatus comprises a module configured to implement the method according to any one of claims 1 to 16.

20. A simulation apparatus, comprising a processor, a memory, and instructions that are stored in the memory and that are run on the processor, wherein when the instructions are run, the simulation apparatus is enabled to perform the method according to any one of claims 1 to 16.

21. A simulation system, comprising a network simulation service provider entity and a network simulation service consumer entity, wherein the network simulation service provider entity comprises a module configured to perform the method according to any one of claims 1 to 5, and the network simulation service consumer entity comprises a module configured to perform the method according to any one of claims 6 to 9.

22. A simulation system, comprising a network simulation service provider entity and a network simulation service consumer entity, wherein the network simulation service provider entity comprises a module configured to perform the method according to any one of claims 10 to 13, and the network simulation service consumer entity comprises a module configured to perform the method according to any one of claims 14 to 16.

23. A computer-readable storage medium, wherein the computer-readable storage medium comprises instructions, and when the instructions are run on a processor, the method according to any one of claims 1 to 16 is implemented.

24. A computer program product, wherein the computer program product comprises related program instructions, and when the related program instructions are executed, the method according to any one of claims 1 to 16 is implemented.
